Europäisches Patentamt

European Patent Office

Office européen des brevets

(11) Publication number: **0 201 110**
**B1**

## (12) EUROPEAN PATENT SPECIFICATION

(45) Date of publication of patent specification: **07.11.90**

(21) Application number: **86200324.1**

(22) Date of filing: **03.03.86**

(51) Int. Cl.⁵: **H 04 N 3/223, H 04 N 5/46**

(54) **Picture display device including a line synchronizing circuit and a line deflection circuit.**

(30) Priority: **06.03.85 NL 8500624**

(43) Date of publication of application:
**12.11.86 Bulletin 86/46**

(45) Publication of the grant of the patent:
**07.11.90 Bulletin 90/45**

(84) Designated Contracting States:
**DE FR GB IT**

(56) References cited:
**EP-A-0 013 598**
**DE-A-2 655 946**
**FR-A-1 558 277**
**FR-A-2 393 487**

(73) Proprietor: **N.V. Philips' Gloeilampenfabrieken**
**Groenewoudseweg 1**
**NL-5621 BA Eindhoven (NL)**

(72) Inventor: **Teuling, Dirk Johan Adriaan**
**c/o INT. OCTROOIBUREAU B.V. Prof. Holstlaan 6**
**NL-5656 AA Eindhoven (NL)**

(74) Representative: **van Gils, Cornelis Johannes**
**Maria et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a picture display device, including a line synchronizing circuit implemented as a phase control loop for receiving an incoming line synchronizing signal having the line frequency and for synchronizing a local oscillator, and a line deflection circuit coupled to the oscillator for generating a line deflection current having a trace and a retrace through a line deflection coil, the coil being coupled to a correction device comprising modulation means for adjusting the value of the line deflection current.

Such a line deflection circuit is disclosed in European Patent Specification EP—A—0,013,598. This prior art circuit includes a modulator for field-frequency modulating the amplitude of the line deflection current for correcting the east-west distortion. A capacitor for the S-correction is arranged in series with the line deflection coil and the circuit is of such a construction that also the S-correction is subjected to a modulation at the field frequency. Also a linearity correction coil with a saturable core which is included in the arrangement in such a manner, that also the magnitude of the linearity correction varies with field frequency, is arranged in series with the coil. The prior art circuit forms part of a colour television receiver and the control signal thereof, coming from a line oscillator, has consequently the line frequency prescribed by a television standard.

The prior art circuit is, however, not suitable for use in a picture display device, for example a monitor in which the line frequency may have different values. Since the line oscillator is controlled, it is always capable of assuming the appropriate frequency, provided it is designed properly, but it will be obvious that the line deflection current generated and corrected by means of a circuit comprising frequency-dependent elements cannot vary appropriately as a function of time for all the line frequencies applied.

The invention has for its object to provide a means to render the prior art circuit suitable for use in a wide line frequency range. To that end, a picture display device of the above-defined type, is characterised in that an input of a control stage is coupled to the line synchronizing circuit and an output is coupled to the modulation means for supplying thereto a signal which is dependent on the frequency of the oscillator for influencing the line deflection current as a function of the line frequency.

Because of the measure according to the invention, the modulator is controlled such by the control stage that the line deflection current always has the desired variation when the line frequency changes. For this an appropriate transfer function of the control stage can be found. As a function of the frequency, a deflection correction is effected which varies such that the deflection current has the appropriate variation in a wide frequency range. It should be noted that the control obtained is a forward control. Small residual errors can be corrected by means of a backward control.

A picture display device for which the modulation means are suitable for adjusting the magnitude of an S-correction of the line deflection current may be characterised in that the control stage is coupled to the modulation means for producing, during the trace period, a correction current through the line deflection coil for correcting the S-distortion.

A picture display device in which the modulation means are suitable for adjusting the magnitude of a linearity correction of the line deflection current may be characterised in that the control stage is coupled to the modulation means for producing, during the trace period, a correction current through the line deflection coil for correcting the linearity.

A picture display device in which the modulation means are suitable for adjusting the amplitude of the line deflection current, may be characterised in that the control stage is coupled to the modulation means for producing a correction signal for influencing the value of the trace voltage present across the line deflection coil during the trace period for maintaining the amplitude of the line deflection current substantially constant.

In doing so, the deflection errors to be corrected can be corrected individually. These errors may alternatively be corrected all together, more specifically with the aid of the three separate control stages.

By a suitable design the picture display device may be characterised by one single control stage for producing both the correction current for correcting the S-distortion and the correction current for correcting the linearity.

The invention will now be described in greater detail by way of example with reference to the accompanying Figures. Herein:

Fig. 1 shows the relevant portion of a picture display device according to the invention,

Fig. 2 shows a diagram useful for explaining the invention, and

Figs. 3, 4, 5, 6 and 7 show variants of the picture display device shown in Fig. 1.

In a picture display device the current flowing through the coil for the horizontal deflection, the line deflection current, has a sawtooth variation as a function of time. If first this variation is assumed to be linear during the trace period, then the voltage across the coil, the trace voltage, is constant. When the line frequency is changed, the width of the displayed picture should preferably not change, so the amplitude of the current remains constant, which means that the trace voltage is inversely proportional to the duration of the trace period and consequently is approximately proportional to the frequency. In a rough approximation, the retrace period is so short as to be disregarded. The what is commonly referred to as the S-capacitor is usually arranged in series with the line deflection coil. Since the capacitance of this capacitor is not infinitely large, the voltage across it is parabolic and of the line frequency. For a specific picture display tube the ratio between the trace voltage and the amplitude of the parabolic voltage must be constant. This implies that also said amplitude must be proportional to the frequency. As the amplitude of the parabolic voltage produced by the line deflection current across the capacitor decreases versus an increasing frequency, it will be obvious that a correction circuit is required for obtaining the desired dependence on frequency. In this situation, because of the simplifications provided, this dependence is not exactly a proportionality.

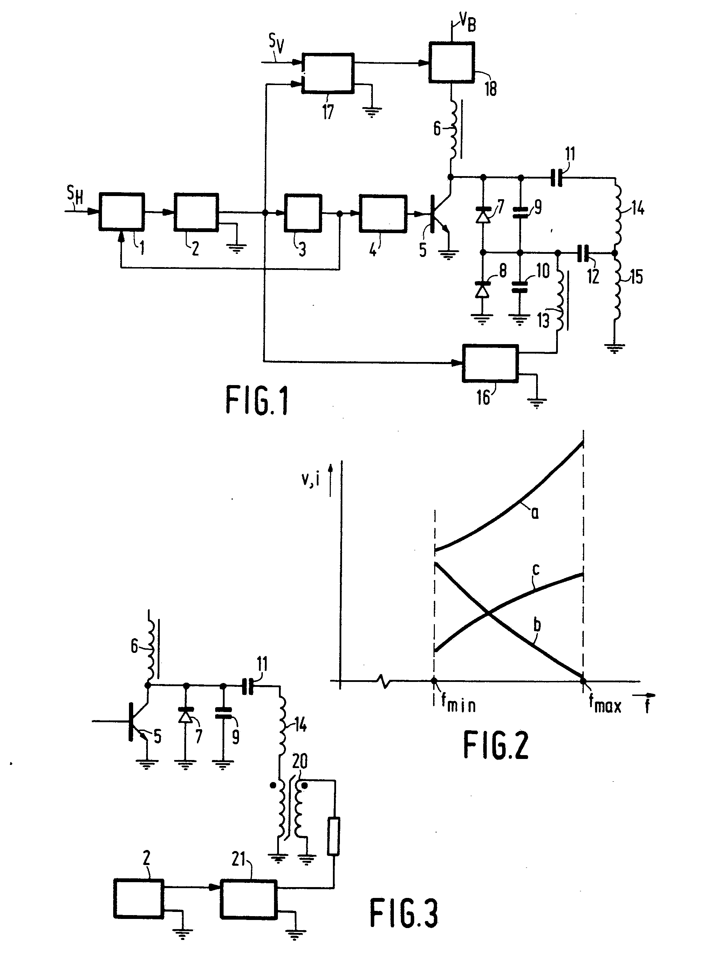

Fig. 1 illustrates such a correction circuit. In this Figure reference numeral 1 denotes a phase discriminator to which an incoming line synchronizing signal $S_H$ and a signal generated by a line oscillator 3 is applied. A retrace pulse derived from the signal of oscillator 3 may alternatively be used as a locally generated signal. The output voltage of discriminator 1, which depends on the phase difference between the two signals applied, is smoothed by means of a loop filter 2. The smoothed voltage obtained is the control voltage used to control oscillator 3 for obtaining the same frequency and substantially the same phase as the incoming line synchronizing signal. In this situation the picture display device of which the present circuit forms part and of which only those portions which are relevant to the invention are shown, is suitable for more than one line frequency. The device, is for example, a monitor which can be connected to different signal sources having different line frequencies. Such signal sources are, for example, video sources for producing signals in accordance with television standards, home computers, teletext circuits with accelerated readout, etc. It is a prerequisite that oscillator 3 is capable of being synchronised with all the incoming line frequencies.

A driver stage 4 amplifies the signal of line oscillator 3 and the amplified signal is applied to the base of a switching transistor 5 of the npn-type. The emitter of this transistor is connected to ground, whilst the collector is connected to a supply inductance 6, to the cathode of a first parallel diode 7, to a first retrace capacitor 9 and to a first trace or S-capacitor 11. The anode of diode 7 is connected to the cathode of a second parallel diode 8, to the other terminal of capacitor 9, to a second retrace capacitor 10, to a second trace or S-capacitor 12 and to an inductance 13. A line deflection coil 14 is connected between the other terminal of capacitor 11 and the other terminal of capacitor 12 and a compensation coil 15 is connected to the junction of capacitor 12 and coil 14. The anode of diode 8 and the other terminal of capacitor 10 and also the other terminal of coil 15 are connected to ground. In a manner still further to be described, the other terminal of inductance 6 is coupled to the positive terminal of the supply voltage source $V_B$ of the circuit, the negative terminal being connected to ground, whilst the other terminal of inductance 13 is connected to a control stage still further to be described.

Everything written in the foregoing is known. Components 1, 2 and 3 form a control loop for generating a line control signal for the horizontal deflection which is synchronized with the incoming line synchronizing signal. Components 4 to 13 form a line deflection circuit which is described in greater detail in United Kingdom Patent Specification GB—A—1,459,922. This prior art circuit generates a line deflection current having a trace and a retrace and flowing through coil 14, and whose amplitude is subjected during the trace period to a variation determined by the above-mentioned control stage. The several components of the deflection circuit satisfy certain tuning conditions defined in the above-mentioned Patent Specification.

According to the invention, the control stage 16 to which the inductance 13 is connected, does not determine the amplitude but the S-correction. For this purpose control stage 16 receives in Figure 1 the control voltage present at the output of filter 2, for example across a smoothing capacitor. This voltage is a direct indication of the frequency of oscillator 3. Stage 16 converts the control voltage into a voltage which is applied *via* inductance 13, which operates as an isolation, this voltage having a predetermined value as a function of the control voltage at the input of stage 16 and, consequently, as a function of the line frequency. The correction voltage applied to the line deflection circuit produces a correction current which flows through inductance 13 and through the deflection circuit.

In a similar manner, a control stage 17 receives the control voltage from oscillator 3 for controlling a control circuit 18 arranged between inductance 6 and source $V_B$. Circuit 18 is of a prior art type and may, for example, incorporate a switching transistor whose conduction times are controlled by the output voltage of stage 17. Circuit 18 generates at that terminal of inductance 6 not connected to transistor 5 a voltage which operates, less the voltage from stage 16, as a supply voltage for the line deflection circuit, and is determined by the output voltage of stage 17. In this situation this output voltage has a predetermined value as a function of the control voltage and consequently of the line frequency. Stages 16 and 17 each include a d.c. voltage amplifier having the desired dependence between the output and the input voltage, for example with the aid of an appropriate feedback network. Stage 16 may incorporate a transistor operating as a controllable load in the manner described in said United Kingdom Patent Specification GB—A—1,459,922 or as a controllable switch in the manner described in United Kingdom Patent Specification GB—A—1,530,661.

For a given value of the line frequency the supply voltage of the line deflection circuit has a determined value, which is independent of variations of voltage $V_B$ whilst also the correction current has a determined value. During the trace period the correction current flows through coil 15 and capacitor 12, whilst the line deflection current flows through capacitors 12 and 11 and through coil 14. Both currents flow through capacitor 12 but in opposite directions. The correction current reduces the parabolic voltage produced by the deflection current across capacitor 12. This reduction increases against an increasing control voltage from stage 16 and results in a decreasing S-correction. The amplitude of the deflection current depends on the value of the trace voltage and consequently on the value of the supply voltage. For a different line frequency the correction current must have such a value that the line deflection current has the required S-shape, whilst the supply voltage must have such a value that the amplitude of the deflection current is constant. This is to hold for all frequencies to be expected. In Fig. 2 a curve $a$ is plotted as a function of the line frequency $f$. Curve $a$ represents the variation of the trace voltage required for obtaining a constant amplitude of the line deflection current between the lowest frequency $f_{min}$ and the highest frequency $f_{max}$ for which the picture display device is suitable. The trace voltage is an increasing function of the frequency which somewhat deviates from the proportional function described in the foregoing. Similarly, in Fig. 2 curve $b$ represents the variation of the correction current flowing through capacitor 12 during the trace period under the influence of stage 16. This current is a decreasing function of the frequency for obtaining an increase in the S-correction at higher frequencies.

During the retrace period both transistor 5 and diodes 7 and 8 are non-conducting. Present on the collector of transistor 5 is a retrace pulse having a large amplitude which as a function of time has a cosinusoidal variation with a frequency which is predominantly determined by capacitors 9 and 10 and coils 14 and 15 and consequently is constant. Also the retrace period, i.e. the time between the instant at which transistor 5 is cut-off and the instant at which diodes 7 and 8 start conducting again, is constant. As will be apparent from said United Kingdom Patent Specification GB—A—1,459,922, the said amplitude is constant, that is to say it does not depend on the control voltage produced by stage 16 and also not on the supply voltage. this holds however only for a constant line frequency. Consequently, in the arrangement shown in Fig. 1 inductance 6 cannot be constituted by the primary winding of a transformer having one or a plurality of secondary windings for generating d.c. voltages. The circuit of Fig. 1 is indeed suitable for correcting the east-west distortion. To that end, stage 17 is supplied with a signal $S_v$ of the field frequency, which signal, for example for correcting the pin-cushion distortion must have the shape of a parabola, which results in the supply voltage and consequently the amplitude of the line deflection current being submitted to a field-frequency variation having the same form.

From the foregoing it will be obvious that the circuit of Fig. 1 is suitable for the S and the east-west corrections and also for stabilising the line deflection at variations of voltage $V_B$. The circuit is not suitable for correcting the linearity error, as this error is usually corrected by means of a coil with saturated core, which is a component whose impedance is an increasing function of the frequency. At a higher frequency the ohmic resistance of the line deflection coil has increasingly less influence on the linearity of the deflection current because of the higher impedance of the deflection coil, so that for the impedance of the linearity correction coil a decreasing function of the frequency is required.

The linearity can indeed be corrected by means of the circuit shown in Fig. 3. This Figure only shows the relevant portion of the circuit, which comprises one parallel diode 7, one retrace capacitor 9 and one trace capacitor 11. The operating winding of a transductor 20, whose control winding is connected to a control stage 21 via a limiting resistor, is arranged in series with capacitor 11 and the line deflection coil 14. In a similar manner as stages 16 and 17 in Fig. 1, stage 21 converts the control voltage of oscillator 3 into a d.c. voltage, which voltage produces during the trace period such a current through the control winding of transductor 20 that the transductor inductance arranged in series with coil 14 has the appropriate value for correcting the linearity in a wide frequency range. For the transfer of stage 21, such a function can be found that the control current of transductor 20 increases in the correct way versus an increasing frequency, which causes the inductance value of the transductor to decrease in the correct manner. In Fig. 2 curve $c$ shows the variation during the trace period of said control current as a function of the frequency between the frequencies $f_{min}$ and $f_{max}$. Curves a, b and c are not plotted in Fig. 2 at the same scale.

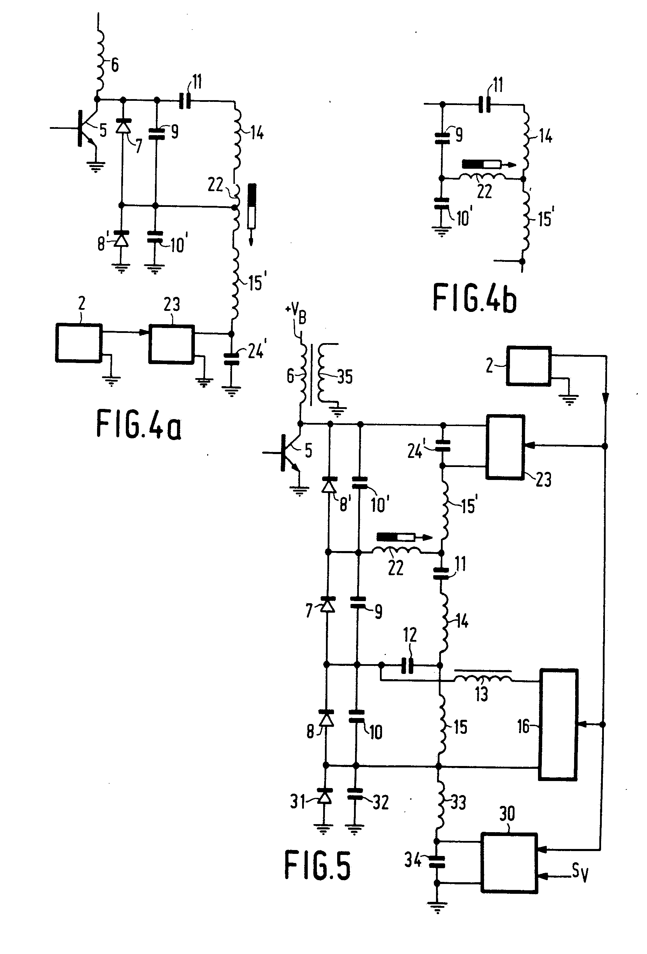

Fig. 4a shows the relevant portion of a variant of the circuit of Fig. 1, which is suitable for the linearity correction and does not require a transductor, which is an expensive component. The circuit of Fig. 4a differs from the circuit in Fig. 1 in that a linearity correction coil 22 is included between the line deflection coil 14 and the compensation coil 15' and in that the other end of coil 15' is not connected to ground but to the output of a control stage 23 to whose input the control voltage of oscillator 3 is applied. The control stage 16 for the S-correction is not connected, so that components 12 and 13 can be omitted. Coil 22 has a saturable and movable core of a magnetic material and a tap connected to the junction of components 7, 8', 9 and 10'. Together with a trace capacitor 24', components 8', 10', 15' form a sawtooth network which is comparable to the sawtooth network comprising the elements 8, 10, 15 and 12 of Fig. 1. Such a circuit is described in United Kingdom Patent Specification 1,511,899 and provides there the linearity correction when the amplitude of the line deflection current is east-west modulated. In Fig. 4a the linearity can be corrected in a similar way as the S-correction in Fig. 1, the voltage applied by means of stage 23 across capacitor 24' producing during the trace period such a correction current through coil 15' and coil 22 that the appropriate linearity correc-

tion between the frequencies $f_{min}$ and $f_{max}$ is obtained. As the line deflection current and the correction current produce magnetic fields of the same direction in the core of coil 22, the correction must decrease versus increasing frequency. In the embodiment shown in Fig. 4b, coil 22 has no tap and is included between the junction of coils 14 and 15' on the one hand and the junction of capacitors 9 and 10' on the other hand. Here the said magnetic fields have opposite directions so that the correction must increase versus an increasing frequency. In Fig. 4b the correction current has a similar variation as the variation represented in Fig. 2 by means of curve c.

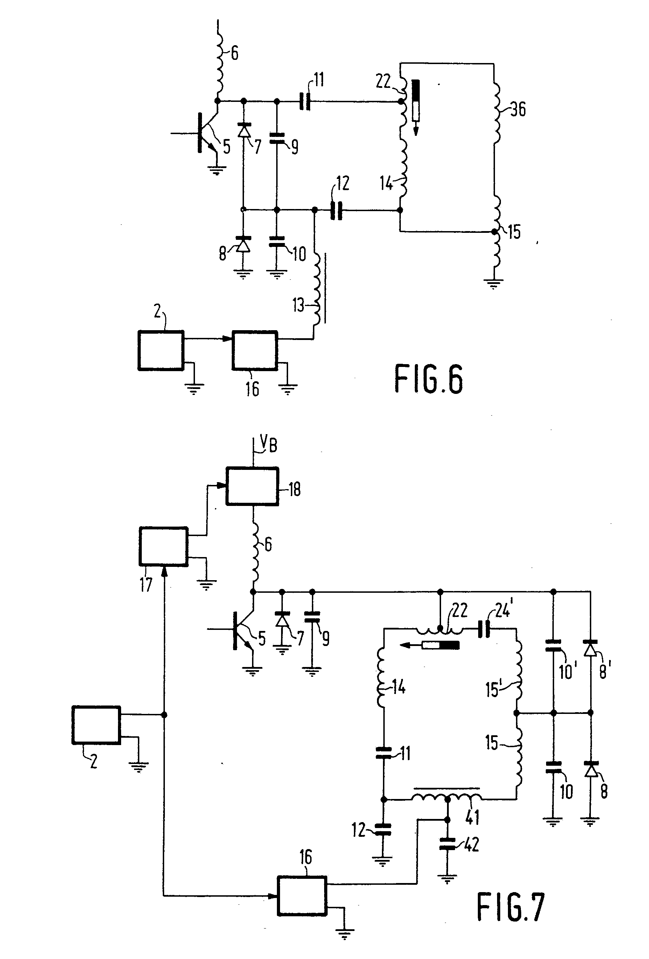

Fig. 5 shows the relevant portion of a circuit with the aid of which the S-correction, the linearity correction and the amplitude correction can be effected independently of each other at different line frequencies. To that end the circuit comprises 3 control stages, each for converting the line oscillator control voltage into a correction voltage, more specifically the stages 16 and 23 already mentioned in the foregoing and a third control stage 30. The circuit comprises the same components 5 to 15 as the circuit of Fig. 1, which components are connected in Fig. 5 in the same way as in Fig. 1, and also the same components 8', 10', 15', 24' and 22 as the circuit of Fig. 4b connected in the same way as the corresponding components of Fig. 4b. The circuit of Fig. 5 further includes a fourth sawtooth network having a parallel diode 31, a retrace capacitor 32, a compensation coil 33 and a trace capacitor 34, which are connected in the same way as the corresponding components of the other sawtooth networks already mentioned in the foregoing and satisfy the same, known tuning condition. The four sawtooth networks are arranged in series between the collector of transistor 5 and ground, the four parallel diodes 8', 7, 8 and 31 consequently being arranged in series with the same conduction direction. The correction voltages made available by the respective control stages 23, 16 and 30 are applied to the respective capacitors 24', 10 and 34. For the S and linearity corrections, respectively, the circuit of Fig. 5 operates in a similar way as the respective circuits of Fig. 1 and Fig. 4b. For the amplitude correction the transfer of stage 30 is chosen such that the voltage across capacitor 34 results in a trace voltage across coil 14, which, as a function of frequency, has the desired variation as illustrated in Fig. 2. If voltage $V_B$ is constant then the voltage at the collector of transistor 5 is constant during the trace period so that inductance 6 can be in the form of a primary winding of a supply voltage transformer having one or a plurality of secondary windings, for example winding 35, for generating constant direct voltages by means of trace rectification. This also holds for the case in which stage 30 is supplied with a signal $S_V$ of the field frequency, for the east-west modulation of the line deflection current.

The circuit of Fig. 5 can be modified such that the amplitude correction is not effected by means of network 31 to 34 but by means of a supply voltage control as in Fig. 1. Components 30 to 35 can then be omitted, the unconnected terminals of components 8, 10 and 15 being connected to ground and supply voltages being generated elsewhere in the picture display device.

Both the circuit obtained in the way as outlined above and the circuit as shown in Fig. 5 have the disadvantage that one or two control stages, 16 and 23 for Fig. 5, generate correction voltages which are isolated from ground. The circuit shown in Fig. 6 does not have this disadvantage. Compared with Fig. 1, the modification in Fig. 6 implies that that terminal of capacitor 11 not connected to the collector of transistor 5 is connected to a tap of the linearity correction coil 22 one end of which is connected to coil 14, whilst also coil 15 has a portion beyond a tap. The tap of coil 15 is connected to the junction of capacitor 12 and coil 14. Obviously, coils 22 and 15 may also be constituted by transformers. An inductance 36 through which a sawtooth-shaped current flows which is determined by the control voltage from stage 16 is included between that end of coil 22 not connected to coil 14 and that end of coil 15 not connected to ground.

In the combined circuit of Fig. 6, both the linearity and the S-correction can be set using only one control stage, more specifically stage 16. Because of an appropriate dimensioning of the components of the circuit it can be accomplished that both the S-correction current flowing through capacitor 12 and the linearity correction current flowing through coil 22 vary in the desired manner versus the frequency. Near $f_{min}$ the control voltage from stage 16 is high. The lower sawtooth network carries a large current. As a result thereof the deflection current through capacitor 12 is compensated for for a significant part and the capacitor accomplishes only a small S-correction. At the stepped-up end of coil 15 the voltage is approximately equal to the voltage at the collector of transistor 5, so that little correction current is applied to coil 22 via inductance 36. Consequently, the linearity correction is at its maximum. Near the frequency $f_{max}$ the control voltage from stage 16 is low, so that the S-correction is large, whilst the linearity correction is small. The amplitude correction is effected in Fig. 6 with the aid of the same means as in Fig. 1.

Fig. 7 shows a preferred embodiment of a line deflection circuit according to the invention which is derived from Fig. 5 and in which, as also in Fig. 6, control stage 16 provides both the linearity and the S-correction. In Fig. 5 all the sawtooth networks are arranged in series. In Fig. 7 the deflection network including coil 14 is arranged in parallel with the series arrangement of the linearity correction network comprising coil 15' and the S-correction network comprising coil 15. A portion of coil 22, coil 14, capacitor 11 and capacitor 12 are arranged in series between the tap of coil 22, which is connected to the collector of transistor 5, and ground. The other portions of coil 22, capacitor 24', coil 15', coil 15 and an inductance 41 are arranged in series between said tap and the junction of capacitors 11 and 12, the junction between the coils 15' and 15 being connected to the junction of diodes 8 and 8' and resistors 10 and 10'. Inductance 41 has a tap connected to the output of stage 16 and to a capacitor 42 whose other terminal is connected to ground. The circuit of Fig. 7 can be dimensioned such that during the trace period the deflection current flows predominantly through the line deflection coil 14 and the first trace capacitor 11, whilst a correction current flows predominantly through elements 24', 15', 15 and 41. Both currents flow through components 12 and 22 which thus influence the variation of the deflection current. An appropriate dimensioning of the d.c. voltage applied to capacitor 42 and of the several components of the circuit can accomplish that the linearity error and the S-distortion for all the frequencies between $f_{min}$ and $f_{max}$ can substantially be eliminated. The amplitude error is corrected by means of circuit 18, with the aid of which also the east-west correction can be effected.

When designing the combined circuit of Fig. 7, in which only one control stage is capable of effecting two corrections, the following consideration may be important i.e. the fact that the sum of the voltages across capacitors 24' and 42 is substantially equal to the voltage across the series network of capacitors 11 and 12. A similar consideration holds for the circuit of Fig. 6.

In the foregoing a number of variants have been described of a line deflection circuit suitable for a plurality of line frequencies. Herein the correction signals applied by the control stages, that is to say 16, 17, 21, 23 and 30 are continuous functions of the line frequency. It will be obvious that the circuit may alternatively be used for the case in which the line frequency can assume only a number of discrete values, in which case each correction signal may be switchable between an equal number of values. It will also be obvious that other variants can be derived from the described circuit variants, the correction signals always being applied in the described manner. The use of the inventive idea need however not be limited to the circuit disclosed in the frequently mentioned United Kingdom Patent Specification GB—A—1,459,922 and its variants. Other so-called modulators for the east-west correction are known, for example from United Kingdom Patent Specifications GB—A—1,574,506 and GB—A—1,589,639 and United States Patents US—A—4,169,988 and US—A—3,879,636. On the basis of the above description a person skilled in the art will easily understand how the correction signals according to the invention can be applied in such a modulator. It should be noted that the control voltage applied to line oscillator 3 by the loop filter 2, which voltage has a specific value for each value of the line frequency, is not the only useful information about the line frequency for determining the correction signals. Further information also suitable for this purpose is, for example, the time between two consecutive line synchronising pulses, which time can be measured accurately by counting a number of clock pulses. If, in a different manner than in Fig. 1, the locally generated line frequency is obtained by dividing the frequency of the signal from an oscillator oscillating at a higher clock frequency, the frequency divider circuit being controlled for synchronization with the incoming line synchronizing signal, then the value of the divider can be used as an information about the line frequency.

**Claims**

1. A picture display device, including a line synchronizing circuit implemented as a phase control loop for receiving an incoming line synchronizing signal having the line frequency and for synchronizing a local oscillator, and a line deflection circuit coupled to the oscillator for generating a line deflection current having a trace and a retrace through a line deflection coil, the coil being coupled to a correction device comprising modulation means for adjusting the value of the line deflection current, characterised in that an input of a control stage is coupled to the line synchronizing circuit and an output is coupled to the modulation means for supplying thereto a signal which is dependent on the frequency of the oscillator for influencing the line deflection current as a function of the line frequency.

2. A picture display device as claimed in Claim 1, the modulation means being suitable for adjusting the magnitude of an S-correction of the line deflection current, characterised in that the control stage is coupled to the modulation means for producing, during the trace period, a correction current through the line deflection coil for correcting the S-distortion.

3. A picture display device as claimed in Claim 2, characterised in that the control stage is coupled to an S-capacitor, the correction current flowing through said capacitor in a direction opposite to the direction of the line deflection current through this capacitor, which correction current decreases versus an increasing line frequency.

4. A picture display device as claimed in Claim 1, the modulation means being suitable for adjusting the magnitude of a linearity correction of the line deflection current, characterised in that the control stage is coupled to the modulation means for producing, during the trace period, a correction current through the line deflection coil for correcting the linearity.

5. A picture display device as claimed in Claim 4, the correction device comprising a linearity correction arrangement in the form of a saturable inductor arranged in series with the line deflection coil, characterised in that the control stage is coupled to the linearity correction arrangement, the correction current flowing through said arrangement in a direction opposite to the direction of the line deflection current through this arrangement, which correction current increases versus an increasing line frequency.

6. A picture display device as claimed in Claim 4, the correction arrangement comprising a linearity correction arrangement in the form of a saturable inductor arranged in series with the line deflection coil, characterised in that the control stage is coupled to the linearity correction arrangement, the correction current flowing through said arrangement in the same direction as the line deflection current through this arrangement, which correction current decreases versus an increasing line frequency.

7. A picture display device as claimed in Claims 2 and 4, characterised by one single control stage for producing both the correction current for correcting the S-distortion and the correction current for correcting the linearity.

8. A picture display device as claimed in Claim 7, the line deflection current comprising a controllable switch and a series arrangement of two diodes arranged in parallel therewith, characterised by two series networks which are in parallel with each other, a first series network comprising the linearity correction arrangement, the line deflection coil and a first S-capacitor and the second series network comprising first, second and third inductors, the parallel network formed being connected to a second S-capacitor, and the network thus formed being in parallel with the switch, a junction of the first and second inductor being connected to a junction of the two diodes and the control stage being coupled to the third inductor.

9. A picture display device as claimed in Claim 1, the modulation means being suitable for adjusting the amplitude of the line deflection current, characterised in that the control stage is coupled to the modulation means for producing a correction signal for influencing the value of the trace voltage present across the line deflection coil during the trace period for maintaining the amplitude of the line deflection current substantially constant.

10. A picture display device as claimed in Claim 9, characterised in that the control stage is coupled to an S-capacitor for applying thereacross a voltage in response to which the trace voltage increases versus an increasing line frequency.

11. A picture display device as claimed in Claim 1, characterised in that the input signal of the control stage is a control signal generated by the phase control loop for the local oscillator, the control stage including a circuit for converting this input signal into an output voltage.

12. A picture display device as claimed in Claim 1, characterised in that the input signal of the control stage is derived from the time interval between successive line synchronizing pulses, the control stage including a circuit for converting this input signal into an output voltage.

13. A picture display device as claimed in Claim 1, including a frequency divider circuit for dividing a clock frequency for obtaining a locally generated signal at line frequency, the value of the divider being controllable for the purpose of synchronization, characterised in that the input signal of the control stage is derived from the value of the divider, the control stage including a circuit for converting this input signal into an output voltage.

## Patentansprüche

1. Bildwiedergabeanordnung mit einer Horizontal-Synchronschaltung, die als Phasensteuerschleife ausgebildet ist zum Empfangen eines eintriffenden Horizontal-Synchronsignals mit der Zeilenfrequenz und zum Synchronisieren eines Ortsoszillators, sowie mit einer mit dem Oszillator zum Erzeugen eines Ablenkstromes mit einem Hin- und Rücklauf durch eine Horizontal-Ablenkspule gekoppelten Horizontal-Ablenkschaltung, wobei diese Spule mit einer Korrekturanordnung gekoppelt ist, die Modulationsmittel aufweist zum Einstellen des Wertes des Horizontal-Ablenkstromes, dadurch gekennzeichnet, daß ein Eingang einer Steuerstufe mit der Horizontal-Synchronschaltung und ein Ausgang mit den Modulationsmitteln gekoppelt ist zum Zuführen zu denselben eines Signals, das von der Frequenz des Oszillators abhängig ist zum Beeinflußen des Horizontal-Ablenkstromes als Funktion der Zeilenfrequenz.

2. Bildwiedergabeanordnung nach Anspruch 1, wobei die Modulationsmittel zum Einstellen der Größe einer S-Korrektur des Horizontal-Ablenkstromes geeignet sind, dadurch gekennzeichnet, daß die Steuerstufe mit den Modulationsmitteln gekoppelt ist zum während der Hinlaufzeit Erzeugen eines Korrekturstromes durch die Horizontal-Ablenkspule zum Korrigieren der S-Verzerrung.

3. Bildwiedergabeanordnung nach Anspruch 2, dadurch gekennzeichnet, daß die Steuerstufe mit einem S-Kondensator gekoppelt ist, wobei der Korrekturstrom durch den genannten Kondensator fließt, und zwar in einer der Richtung des Horizontal-Ablenkstromes durch diesen Kondensator entgegengesetzten Richtung, wobei der Korrekturstrom bei einer zunehmenden Zeilenfrequenz abnimmt.

4. Bildwiedergabeanordnung nach Anspruch 1, wobei die Modulationsmittel sich eignen zum Einstellen der Größe einer Linearitätskorrektur des Horizontal-Ablenkstromes, dadurch gekennzeichnet, daß die Steuerstufe zum während der Hinlaufzeit Erzeugen eines Korrekturstromes durch die Horizontal-Ablenkspule zum Korrigieren der Linearität mit den Modulationsmitteln gekoppelt ist.

5. Bildwiedergabeanordnung nach Anspruch 4, wobei die Korrekturanordnung eine Linearitätskorrekturanordnung in Form einer mit der Horizontal-Ablenkspule in Reihe geschalteten sättigbaren Induktanz aufweist, dadurch gekennzeichnet, daß die Steuerstufe mit der Linearitätskorrekturanordnung gekoppelt ist, wobei der Korrekturstrom in einer der Richtung des Horizontal-Ablenkstromes entgegengesetzten Richtung durch die genannte Anordnung fließt, wobei dieser Korrekturstrom bei zunehmender Zeilenfrequenz abnimmt.

6. Bildwiedergabeanordnung nach Anspruch 4, wobei die Korrekturanordnung eine Linearitätskorrekturanordnung in Form einer mit der Horizontal-Ablenkspule in Reihe geschalteten sättigbaren Induktanz aufweist, dadurch gekennzeichnet, daß die Steuerstufe mit der Linearitätskorrekturanordnung gekoppelt ist, wobei der Korrekturstrom in derselben Richtung wie der Horizontal-Ablenkstrom durch diese Anordnung fließt, wobei dieser Korrekturstrom bei zunehmender Zeilenfrequenz abnimmt.

7. Bildwiedergabeanordnung nach Anspruch 2 und 4, gekennzeichnet, durch eine einzige Steuerstufe zum Erzeugen des Korrekturstromes zur S-Verzerrungskorrektur sowie des Korrekturstromes zur Linearitätskorrektur.

8. Bildwiedergabeanordnung nach Anspruch 7, wobei die Horizontal-Ablenkschaltung einen steuerbaren Schalter sowie eine zu demselben parallelgeschaltete Reihenschaltung aus zwei Dioden aufweist, gekennzeichnet durch zwei parallel zueinander geschaltete Reihennetzwerke, wobei ein erstes Reihennetzwerk die Linearitätskorrekturanordnung, die Horizontal-Ablenkspule und einen ersten S-Kondensator aufweist und wobei das zweite Reihennetzwerk eine erste, zweite und dritte Induktanz aufweist, wobei das gebildete Parallelnetzwerk mit einem zweiten S-Kondensator verbunden ist und wobei das auf diese Weise gebildete Netzwerk zu dem Schalter parallelgeschaltet ist, wobei ein Knotenpunkt der ersten und zweiten Induktanz mit einem Knotenpunkt der zwei Dioden, und die Steuerstufe mit der dritten Induktanz verbunden ist.

9. Bildwiedergabeanordnung nach Anspruch 1, wobei die Modulationsmittel zum Einstellen der Amplitude des Horizontal-Ablenkstromes geeignet sind, dadurch gekennzeichnet, daß die Steuerstufe mit den Modulationsmitteln verbunden ist zum Erzeugen eines Korrektursignals zur Beeinflußung des Wertes der während der Hinlaufperiode an der Horizontal-Ablenkspule vorhandenen Hinlaufspannung um die Amplitude des Horizontal-Ablenkstromes nahezu konstant zu halten.

10. Bildwiedergabeanordnung nach Anspruch 9, dadurch gekennzeichnet, daß die Steuerstufe mit einem S-Kondensator gekoppelt ist um demselben eine Spannung zuzuführen, wodurch bei einer zunehmenden Zeilenfrequenz die Hinlaufspannung zunimmt.

11. Bildwiedergabeanordnung nach Anspruch 1, dadurch gekennzeichnet, daß das Eingangssignal der Steuerstufe ein von der Phasensteuerschleife für den Ortsoszillator erzeugtes Steuersignal ist, wobei die Steuerstufe eine Schaltungsanordnung aufweist zum Umwandeln dieses Eingangssignals in eine Ausgangsspannung.

12. Bildwiedergabeanordnung nach Anspruch 1, dadurch gekennzeichnet, daß das Eingangssignal der Steuerstufe von dem Zeitintervall zwischen aufeinanderfolgenden Horizontal-Synchronimpulsen abgeleitet wird, wobei die Steuerstufe eine Schaltungsanordnung aufweist, die dieses Eingangssignal in eine Ausgangsspannung umwandelt.

13. Bildwiedergabeanordnung nach Anspruch 1, mit einer Frequenzteilerschaltung zum Teilen einer Taktimpulsfrequenz zum Erhalten eines örtlich erzeugten Signals mit der Zeilenfrequenz, wobei der Wert des Teilers zu Synchronisierungszwecken regelbar ist, dadurch gekennzeichnet, daß das Eingangssignal der Steuerstufe von dem Wert des Teilers abgeleitet wird, wobei die Steuerstufe eine Schaltungsanordnung aufweist zum Umwandeln dieses Eingangssignals in eine Ausgangsspannung.

**Revendications**

1. Dispositif d'affichage d'image comprenant un circuit de synchronisation de ligne réalisé sous la forme d'une boucle de commande de phase pour recevoir un signal de synchronisation de ligne d'entrée ayant la fréquence de ligne et pour synchroniser un oscillateur local, et un circuit de déviation de ligne couplé à l'oscillateur pour engendrer un courant de déviation de ligne à balayage et retour de balayage passant par une bobine de déviation de ligne, la bobine étant couplée à un dispositif correcteur comprenant des moyens de modulation pour ajuster la valeur du courant de déviation de ligne, caractérisé en ce qu'une entrée d'un étage de commande est couplée au circuit de synchronisation de ligne et une sortie est couplée aux moyens de modulation pour fournir à ceux-ci un signal qui dépend de la fréquence de l'oscillateur en vue d'influencer le courant de déviation de ligne en fonction de la fréquence de ligne.

2. Dispositif d'affichage d'image suivant la revendication 1, dans lequel les moyens de modulation sont à même d'ajuster la grandeur d'une correction en S du courant de déviation de ligne, caractérisé en ce que l'étage de commande est couplé aux moyens de modulation pour produire, pendant la période de balayage, un courant de correction dans la bobine de déviation de ligne en vue de corriger la distorsion en S.

3. Dispositif d'affichage d'image suivant la revendication 2, caractérisé en ce que l'étage de commande est couplé à un condensateur S, le courant de correction traversant ce condensateur dans un sens opposé à celui dans lequel le courant de déviation de ligne traverse ce condensateur, ce courant de correction diminuant à mesure que la fréquence de ligne augmente.

4. Dispositif d'affichage d'image suivant la revendication 1, dans lequel les moyens de modulation sont à même d'ajuster la grandeur d'une correction de linéarité du courant de déviation de ligne, caractérisé en ce que l'étage de commande est couplé aux moyens de modulation pour produire, pendant la période de balayage, un courant de correction dans la bobine de déviation de ligne pour corriger la linéarité.

5. Dispositif d'affichage d'image suivant la revendication 4, dans lequel le dispositif de correction comprend un montage correcteur de linéarité ayant la forme d'une inductance saturable montée en série avec la bobine de déviation de ligne, caractérisé en ce que l'étage de commande est couplé au montage correcteur de linéarité, le courant de correction traversant ce montage dans un sens opposé à celui dans lequel le courant de déviation de ligne traverse ce montage, ce courant de correction augmentant à mesure que la fréquence de ligne croît.

6. Dispositif d'affichage suivant la revendication 4, dans lequel le dispositif de correction comprend un montage correcteur de linéarité ayant la forme d'une inductance saturable montée en série avec la bobine de déviation de ligne, caractérisé en ce que l'étage de commande est couplé au montage correcteur de linéarité, le courant de correction traversant ce montage dans le même sens que celui dans lequel le courant de déviation de ligne traverse ce montage, ce courant de correction diminuant à mesure que la fréquence de ligne augmente.

7. Dispositif d'affichage d'image suivant les revendications 2 et 4, caractérisé par un seul étage de commande pour produire aussi bien le courant de correction servant à corriger la distorsion en S que le courant de correction servant à corriger la linéarité.

8. Dispositif d'affichage d'image suivant la revendication 7, dans lequel la bobine de déviation de ligne comprend un commutateur pouvant être commandé et un montage en série de deux diodes en parallèle avec celui-ci, caractérisé par deux réseaux en série qui sont en parallèle l'un avec l'autre, un premier réseau en série comprenant le montage correcteur de linéarité, la bobine de déviation de ligne et un premier condensateur S et le second réseau en série comprenant une première, une deuxième et une troisième inductance, le réseau parallèle formé étant connecté à un second condensateur S et le réseau ainsi formé étant en parallèle avec le commutateur, une jonction de la première et de la deuxième inductance étant connectée à une jonction des deux diodes et l'étage de commande étant couplé à la troisième inductance.

9. Dispositif d'affichage d'image suivant la revendication 1, dans lequel les moyens de modulation sont à même d'ajuster l'amplitude du courant de déviation de ligne, caractérisé en ce que l'étage de commande est couplé aux moyens de modulation pour produire un signal de correction servant à influencer la valeur de la tension de balayage présente dans la bobine de déviation de ligne pendant la période de balayage en vue de maintenir l'amplitude du courant de déviation de ligne en substance constante.

10. Dispositif d'affichage d'image suivant la revendication 9, caractérisé en ce que l'étage de commande est couplé à un condensateur S pour y appliquer une tension en réponse à laquelle la tension de balayage augmente à mesure que la fréquence de ligne croît.

11. Dispositif d'affichage d'image suivant la revendication 1, caractérisé en ce que le signal d'entrée de l'étage de commande est un signal de commande engendré par la boucle de commande de phase pour l'oscillateur local, l'étage de commande comprenant un circuit servant à convertir ce signal d'entrée en une tension de sortie.

12. Dispositif d'affichage d'image suivant la revendication 1, caractérisé en ce que le signal d'entrée de l'étage de commande est dérivé de l'intervalle de temps séparant des impulsions de synchronisation de ligne successives, l'étage de commande comportant un circuit servant à convertir ce signal d'entrée en une tension de sortie.

13. Dispositif d'affichage d'image suivant la revendication 1, comprenant un circuit diviseur de fréquence pour diviser une fréquence d'horloge en vue d'obtenir un signal généré localement à la fréquence de ligne, la valeur du diviseur pouvant être réglée en vue de la synchronisation, caractérisé en ce que le signal d'entrée de l'étage de commande est dérivé de la valeur du diviseur l'étage de commande comprenant un circuit servant à convertir ce signal d'entrée en une tension de sortie.

FIG.1

FIG.2

FIG.3

FIG.4a

FIG.4b

FIG.5

FIG.6

FIG.7